# EUROPEAN PATENT SPECIFICATION

(11) **EP 2 728 925 B1**
(45) Date of publication and mention of the grant of the patent: **21.01.2015**
(21) Application number: 13020125.4
(22) Date of filing: 05.11.2013
(51) Int. Cl.: H04W 28/02

(54) **Congestion control methods for dual priority devices and apparatuses using the same**
Verfahren zur Überlastregelung für Vorrichtung mit doppelter Priorität und Vorrichtungen damit
Procédés de contrôle d'encombrement destinés à des dispositifs prioritaires doubles et appareils les utilisant

(30) Priority: 05.11.2012 US 201261722522 P
(43) Date of publication of application: 07.05.2014
(73) Proprietor: HTC Corporation, Taoyuan County 330 (TW)
(72) Inventor: Tiwari, Kundan, Taoyuan City, Taoyuan County 330 (TW)
(74) Representative: Klang, Alexander H.

(56) References cited:
- WO-A1-2013/109061
- RAHUL VAIDYA ET AL: "Network congestion control: mechanisms for congestion avoidance and recovery", CONFERENCE PROCEEDINGS ARTICLE, 1 November 2011 (2011-11-01), pages 199-207, XP55078319,

## Description

### BACKGROUND OF THE INVENTION

### Field of the Invention

The invention generally relates to congestion control, and more particularly, to apparatuses and congestion control methods for dual priority devices.

### Description of the Related Art

In a typical mobile communication environment, a Mobile Station (MS) (also called User Equipment (UE)), including a mobile telephone (also known as a cellular or cell phone), or a laptop computer with wireless communications capability, may communicate voice and/or data signals with one or more service networks. The wireless communications between the MS and the service networks may be performed using various wireless technologies, such as Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced (LTE-A) technology, and others.

Take the Long Term Evolution (LTE) technology in compliance with the 3rd Generation Partnership Project (3GPP) Technical Specification (TS) 24.008, v11.4.0 (referred to herein as the TS 24.008 specification) and the 3GPP TS 24.301, v11.4.0 (referred to herein as the TS 24.301 specification) as an example. An MS may initiate GPRS Mobility Management (GMM) procedures and Session Management (SM) procedures for updating its location to the service network and activating, modifying, or deactivating the Packet Data Protocol (PDP) sessions required for data services. However, in case of insufficient resources in the service network (e.g., congestion in the service network), the service network may reject the MS-initiated GMM procedures or SM procedures with a SM/GMM congestion control back-off timer for the MS to count a time period during which the MS refrains from initiating any GMM/SM procedures to the service network, so that further congestion in the service network may be avoided.

RAHUL VAIDYA ET AL.: 'Network congestion control: mechanisms for congestion avoidance and recovery' ACWR '11 PROCEEDINGS OF THE 1ST INTERNATIONAL CONFERENCE ON WIRELESS TECHNOLOGIES FOR HUMANITARIAN RELIEF, November 2011, pages 199 - 207, XP055078319 discloses various mechanisms for congestion avoidance and recovery, including the use of a back-off timer and back-off timer management wherein the starvation of the UE for resources can be avoided by dynamically changing the priority of the device.

### BRIEF SUMMARY OF THE INVENTION

In a first aspect of the invention, a mobile communication device configured for dual priority is provided. The mobile communication device comprises a wireless module and a controller module. The wireless module performs wireless transmission and reception to and from a service network. The controller module starts a Session Management (SM) congestion control back-off timer for an Access Point Name (APN) in response to a first SM procedure being rejected by the service network, which was initiated for the APN with a first low priority indicator indicating that the mobile communication device was configured for Non Access Stratum (NAS) signaling low priority. Also, the controller module does not stop the SM congestion control back-off timer for the APN in response to a second SM procedure being initiated by the service network for the APN and being related to an existed Packet Data Protocol (PDP) context previously requested by the mobile communication device with a second low priority indicator indicating that the mobile communication device was not configured for NAS signaling low priority.

In a second aspect of the invention, a congestion control method for a mobile communication device configured for dual priority is provided. The congestion control method comprises the steps of: starting an SM congestion control back-off timer for an APN in response to a first SM procedure being rejected by a service network, which was initiated for the APN with a first low priority indicator indicating that the mobile communication device was configured for NAS signaling low priority; and not stopping the SM congestion control back-off timer for the APN in response to a second SM procedure being initiated by the service network for the APN and being related to an existed PDP context previously requested by the mobile communication device with a second low priority indicator indicating that the mobile communication device was not configured for NAS signaling low priority.

In a third aspect of the invention, a mobile communication device configured for dual priority is provided. The mobile communication device comprises a wireless module and a controller module. The wireless module performs wireless transmission and reception to and from a service network. The controller module starts a GPRS (General Packet Radio Service) Mobility Management (GMM) congestion control back-off timer in response to a first GMM procedure being rejected by the service network, which was initiated with a first low priority indicator indicating that the mobile communication device was configured for NAS signaling low priority. Also, the controller module does not stop the GMM congestion control back-off timer in response to receiving a paging request for GPRS services after a second GMM procedure which was accepted by the service network and was initiated with a second low priority indicator indicating that the mobile communication device was not configured for NAS signaling low priority.

In a fourth aspect of the invention, a congestion control method for a mobile communication device configured for dual priority is provided. The congestion control method comprises the steps of: starting a GMM congestion control back-off timer in response to a first GMM procedure being rejected by a service network, which was initiated with a first low priority indicator indicating that the mobile communication device was configured for NAS signaling low priority; and not stopping the GMM congestion control back-off timer in response to receiving a paging request for GPRS services after a second GMM procedure which was accepted by the service network and was initiated with a second low priority indicator indicating that the mobile communication device was not configured for NAS signaling low priority.

Other aspects and features of the present invention will become apparent to those with ordinary skill in the art upon review of the following descriptions of specific embodiments of mobile communication devices and congestion control methods.

### BRIEF DESCRIPTION OF DRAWINGS

The invention can be more fully understood by reading the subsequent detailed description and examples with references made to the accompanying drawings, wherein:
Fig. 1 is a block diagram illustrating a mobile communication environment according to an embodiment of the invention;
Fig. 2 is a flow chart illustrating the congestion control method for a mobile communication device configured as dual priority according to an embodiment of the invention;
Fig. 3 is a message sequence chart illustrating the SM congestion control for the mobile communication device 110 according to an embodiment of the invention;
Fig. 4 is a flow chart illustrating the congestion control method for a mobile communication device configured as dual priority according to another embodiment of the invention; and
Fig. 5 is a message sequence chart illustrating the GMM congestion control for the mobile communication device 110 according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof. The 3GPP specifications described herein are used to teach the spirit of the invention, and the invention is not limited thereto.

Depending on the type of communication with the service network, an MS configured for dual priority may selectively set a low priority indicator to indicate that it is configured for Non Access Stratum (NAS) signaling low priority or not, in a request message of a Session Management (SM) procedure or a GPRS Mobility Management (GMM) procedure. For example, if the communication is initiated for low priority services, e.g., the Machine Type Communication (MTC) services, then the dual-priority MS may set the low priority indicator to "MS is configured for NAS signaling low priority". Otherwise, if the communication is initiated for normal priority services, e.g., voice services or delay-sensitive data services, then the dual-priority MS may set the low priority indicator to "MS is not configured for NAS signaling low priority".

It should be noted that, according to the TS 24.008 specification and the TS 24.301 specification, if the service network initiates an SM procedure for an Access Point Name (APN) for which the MS has a corresponding SM congestion control back-off timer running, the MS should stop the SM congestion control back-off timer for the APN. However, for a dual-priority MS, the SM congestion control back-off timer for the APN may have been previously started by an MS-initiated SM procedure with the low priority indicator set to "MS is configured for NAS signaling low priority", while the network-initiated SM procedure may be specific for normal priority services. In this case, the SM congestion control back-off timer for the APN will be mistakenly stopped and the dual-priority MS will be allowed to initiate SM procedures for the APN for low priority services. As a result, the SM congestion control for low priority services of the dual-priority MS will not work and further congestion for the APN may occur.

Also, a similar problem exists for the handling of GMM procedures. According to the TS 24.008 specification and the TS 24.301 specification, if a GMM congestion control back-off timer is running for a dual-priority MS when it receives a paging request for GPRS services, the MS should stop the GMM congestion control back-off timer. However, the GMM congestion control back-off timer may have been previously started by an MS-initiated GMM procedure with the low priority indicator set to "MS is configured for NAS signaling low priority", while the paging request may be specific for normal priority services. In this case, the GMM congestion control back-off timer will be mistakenly stopped and the dual-priority MS will be allowed to initiate GMM procedures for low priority services. As a result, the GMM congestion control for low priority services of the dual-priority MS will not work and further congestion may occur.

In addition to spotting the aforementioned problems in the 3GPP specifications, the invention further proposes solutions in which the dual-priority MS checks if the running SM/GMM congestion control back-off timer was started for low priority services when an SM procedure is initiated by the service network or when a paging request for GPRS is received from the service network, so that the SM/GMM congestion control back-off timer will not be stopped for the cases described above.

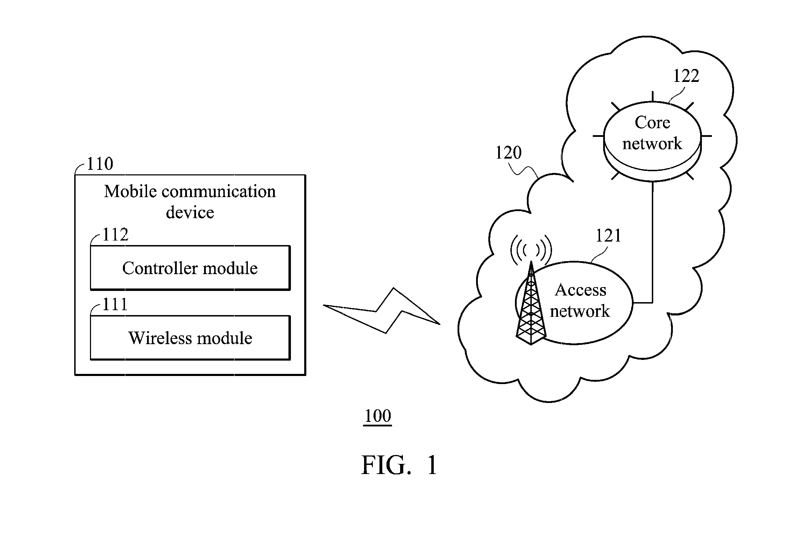

Fig. 1 is a block diagram illustrating a mobile communication environment according to an embodiment of the invention. In the mobile communication environment 100, the mobile communication device 110 wirelessly communicates with the service network 120 for obtaining wireless services. The mobile communication device 110 may be a smart phone, a panel Personal Computer (PC), a laptop computer, or any computing device supporting at least the wireless technology utilized by the service network 120. The mobile communication device 110 is configured as dual priority. That is, the mobile communication device 110 may selectively initiate SM/GMM procedures with different priority settings, depending on the type of communication with the service network 120.

The service network 120 may comprise an access network 121 and a core network 122. The access network 121 is responsible for processing radio signals, terminating radio protocols, and connecting the mobile communication device 110 with the core network 122. The core network 122 is responsible for performing mobility management, network-side authentication, and interfaces with public networks. For example, if the service network 120 is a WCDMA system, the access network 121 may be a Universal Terrestrial Radio Access Network (UTRAN) which includes at least a Node-B (NB) and a Radio Network Controller (RNC), and the core network 122 may be a General Packet Radio Service (GPRS) core which includes a Home Location Register (HLR), at least one Serving GPRS Support Node (SGSN), and at least one Gateway GPRS Support Node (GGSN). Alternatively, if the service network 120 is an LTE/LTE-A system, the access network 121 may be an Evolved-UTRAN (E-UTRAN) which includes at least an evolved NB (eNB), and the core network 122 may be an Evolved Packet Core (EPC) which includes a Home Subscriber Server (HSS), Mobility Management Entity (MME), Serving Gateway (S-GW), and Packet Data Network Gateway (PDN-GW or P-GW).

The mobile communication device 110 comprises a wireless module 111 for performing the functionality of wireless transmission and reception to and from the service network 120, and a controller module 112 for controlling the operation of the wireless module 111 and other functional components, such as a display unit and/or keypad serving as the Man-Machine Interface (MMI), a storage unit storing the program codes of applications and/or communication protocols, or others. Also, the controller module 112 controls the wireless module 111 for performing the congestion control methods of the invention. To further clarify, the wireless module 111 may be a Radio Frequency (RF) unit, and the controller module 112 may be a general-purpose processor or a Micro-Control Unit (MCU) of a baseband unit. The baseband unit may contain multiple hardware devices to perform baseband signal processing, including analog-to-digital conversion (ADC)/digital-to-analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the mobile communication system, wherein the radio frequency may be 900MHz, 1900MHz, or 2100MHz utilized in WCDMA systems, or may be 900MHz, 2100MHz, or 2.6GHz utilized in LTE/LTE-Advanced systems, or others depending on the Radio Access Technology (RAT) in use.

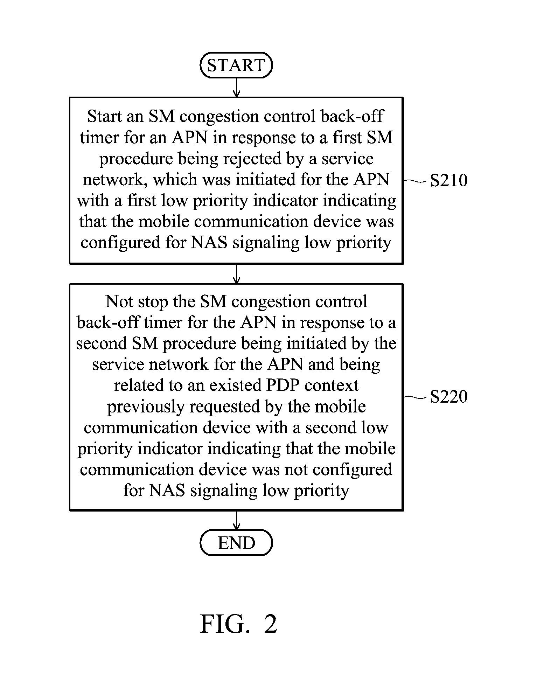

Fig. 2 is a flow chart illustrating the congestion control method for a mobile communication device configured as dual priority according to an embodiment of the invention. To begin, the mobile communication device starts an SM congestion control back-off timer for an APN in response to a first SM procedure being rejected by a service network, which was initiated for the APN with a first low priority indicator indicating that the mobile communication device was configured for NAS signaling low priority (step S210). Next, the mobile communication device does not stop the SM congestion control back-off timer for the APN in response to a second SM procedure being initiated by the service network for the APN and being related to an existed PDP context previously requested by the mobile communication device with a second low priority indicator indicating that the mobile communication device was not configured for NAS signaling low priority (step S220), and the method ends. Thus, the mobile communication device 110 stops the SM congestion control back-off timer which is still running for the same APN indicated in the second SM procedure, unless the mobile communication device 110 is configured as dual priority and had initiated the first SM procedure that was rejected for low priority services.

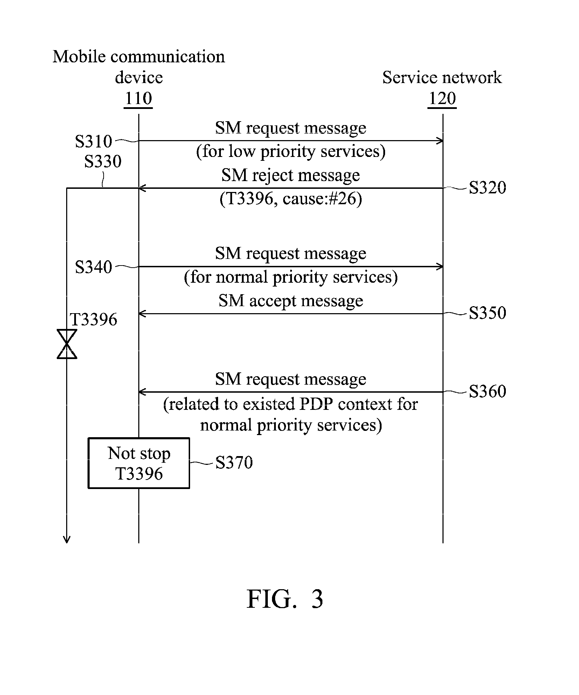

Fig. 3 is a message sequence chart illustrating the SM congestion control for the mobile communication device 110 according to an embodiment of the invention. To begin, the mobile communication device 110 initiates an SM procedure for low priority services by transmitting an SM request message, which comprises a low priority indicator set to "MS is configured for NAS signaling low priority" and indicates an APN, to the service network 120 (step S310). Due to congestion with the indicated APN, the service network 120 rejects the request by replying to the mobile communication device 110 with an SM reject message comprising a value for the SM congestion control back-off timer, T3396, and an SM cause set to "#26" for indicating insufficient resources (step S320). In response to receiving the SM reject message, the mobile communication device 110 starts the SM congestion control back-off timer for the APN with the value in the SM reject message (step S330), and the mobile communication device 110 refrains from initiating any SM procedure for low priority services for the APN when the SM congestion control back-off timer is running.

Specifically for LTE technology in compliance with the TS 24.008 and TS 24.301 specifications, the SM request message in step S310 may be an ACTIVATE PDP CONTEXT REQUEST, ACTIVATE SECONDARY PDP CONTEXT REQUEST, MODIFY PDP CONTEXT REQUEST, PDN CONNECTIVITY REQUEST, BEARER RESOURCE ALLOCATION REQUEST, or BEARER RESOURCE MODIFICATION REQUEST message, while the SM reject message in step S320 may be an ACTIVATE PDP CONTEXT REJECT, ACTIVATE SECONDARY PDP CONTEXT REJECT, MODIFY PDP CONTEXT REJECT, PDN CONNECTIVITY REJECT, BEARER RESOURCE ALLOCATION REJECT, or BEARER RESOURCE MODIFICATION REJECT message.

Although the mobile communication device 110 refrains from initiating any SM procedure for low priority services for the APN during the running period of the SM congestion control back-off timer, the mobile communication device 110, which is configured as dual priority, may still initiate SM procedures for normal priority services for the APN. Thus, the mobile communication device 110 initiates another SM procedure for normal priority services by transmitting an SM request message, which comprises a low priority indicator set to "MS is not configured for NAS signaling low priority" and indicates the same APN, to the service network 120 (step S340). As the request is made for normal priority services, the service network 120 accepts the request by replying to the mobile communication device 110 with an SM accept message (step S350).

Specifically for LTE technology in compliance with the TS 24.008 and TS 24.301 specifications, the SM accept message in step S350 may be an ACTIVATE PDP CONTEXT ACCEPT, ACTIVATE SECONDARY PDP CONTEXT ACCEPT, or MODIFY PDP CONTEXT ACCEPT, PDN CONNECTIVITY ACCEPT, BEARER RESOURCE ALLOCATION ACCEPT, or BEARER RESOURCE MODIFICATION ACCEPT message.

Next, when the SM congestion control back-off timer is still running for the APN, the mobile communication device 110 receives an SM request message of a network-initiated SM procedure for the same APN from the service network 120 (step S360), wherein the network-initiated SM procedure is related to an existed PDP context which was previously requested and accepted during the MS-initiated SM procedure in steps S340 and S350. In response to determining that the network-initiated SM procedure is specific for normal priority services and the SM congestion control back-off timer is running for low priority services, the mobile communication device 110 does not stop the SM congestion control back-off timer for the APN (step S370).

Specifically for LTE technology in compliance with the TS 24.008 and TS 24.301 specifications, the SM request message in step S360 may be a REQUEST PDP CONTEXT ACTIVATION, REQUEST SECONDARY PDP CONTEXT ACTIVATION, MODIFY PDP CONTEXT REQUEST, ACTIVATE DEFAULT EPS BEARER CONTEXT REQUEST, ACTIVATE DEDICATED EPS BEARER CONTEXT REQUEST, or MODIFY EPS BEARER CONTEXT REQUEST message.

After that, the mobile communication device 110 may proceed with either rejecting the request or transmitting another request message to respond to the request for session management with the service network, and the detailed description thereof is omitted herein for brevity since it is beyond the scope of the invention, or reference may be made to the TS 24.008 specification. Likewise, regarding the detailed description of the handling of the SM request messages, the SM reject message, and the SM accept message in steps S310∼S320 and S340∼S360, reference may be made to the TS 24.008 and TS 24.301 specifications.

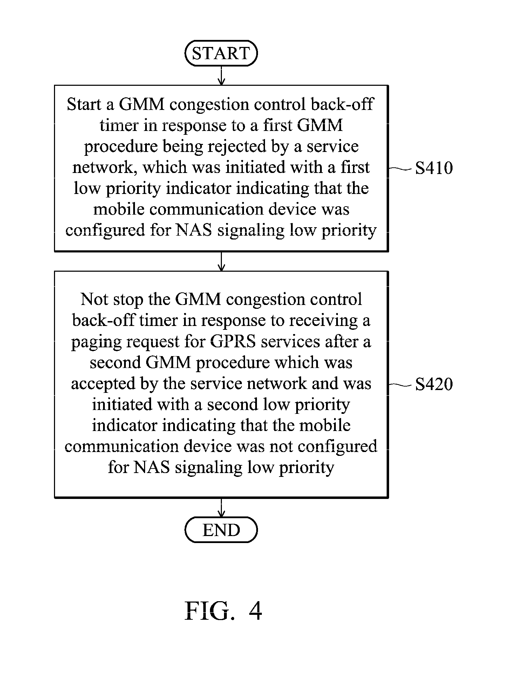

Fig. 4 is a flow chart illustrating the congestion control method for a mobile communication device configured as dual priority according to another embodiment of the invention. To begin, the mobile communication device starts a GMM congestion control back-off timer in response to a first GMM procedure being rejected by a service network, which was initiated with a first low priority indicator indicating that the mobile communication device was configured for NAS signaling low priority (step S410). Next, the mobile communication device does not stop the GMM congestion control back-off timer in response to receiving a paging request for GPRS services after a second GMM procedure which was accepted by the service network and was initiated with a second low priority indicator indicating that the mobile communication device was not configured for NAS signaling low priority (step S420), and the method ends. Thus, the mobile communication device 110 stops the GMM congestion control back-off timer which is still running, unless the mobile communication device 110 is configured as dual priority and had initiated the first GMM procedure that was rejected for low priority services.

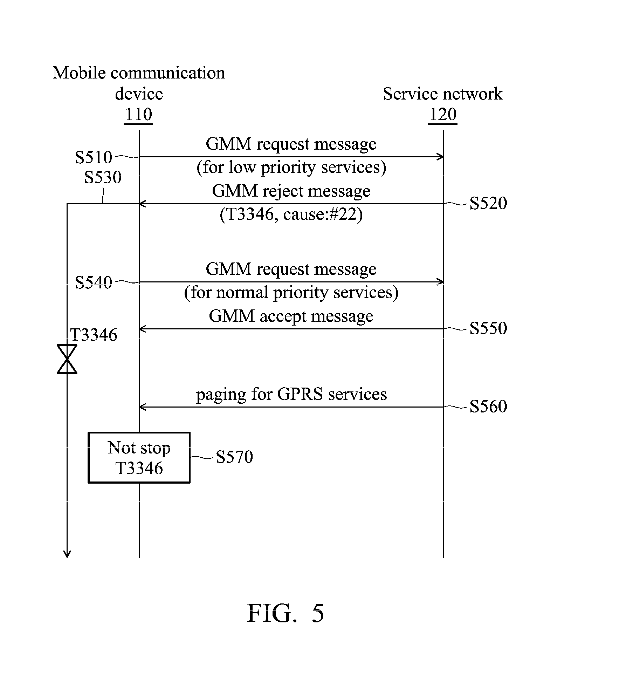

Fig. 5 is a message sequence chart illustrating the GMM congestion control for the mobile communication device 110 according to an embodiment of the invention. To begin, the mobile communication device 110 initiates a GMM procedure for low priority services by transmitting a GMM request message, which comprises a low priority indicator set to "MS is configured for NAS signaling low priority", to the service network 120 (step S510). Due to congestion in the service network 120, the service network 120 rejects the request by replying to the mobile communication device 110 with a GMM reject message comprising a value for the GMM congestion control back-off timer, T3346, and a GMM cause set to "#22" for indicating congestion (step S520). In response to receiving the GMM reject message, the mobile communication device 110 starts the GMM congestion control back-off timer with the value in the GMM reject message (step S530), and the mobile communication device 110 refrains from initiating any GMM procedure for low priority services when the GMM congestion control back-off timer is running.

Specifically for LTE technology in compliance with the TS 24.008 and TS 24.301 specifications, the GMM request message in step S510 may be an ATTACH REQUEST, ROUTING AREA UPDATE REQUEST, TRACKING AREA UPDATE REQUEST, EXTENDED SERVICE REQUEST, or SERVICE REQUEST message, while the GMM reject message in step S520 may be an ATTACH REJECT, ROUTING AREA UPDATE REJECT, TRACKING AREA UPDATE REJECT, EXTENDED SERVICE REJECT, or SERVICE REJECT message.

Although the mobile communication device 110 refrains from initiating any GMM procedure for low priority services during the running period of the GMM congestion control back-off timer, the mobile communication device 110, which is configured as dual priority, may still initiate GMM procedures for normal priority services. Thus, the mobile communication device 110 initiates another GMM procedure for normal priority services by transmitting a GMM request message, which comprises a low priority indicator set to "MS is not configured for NAS signaling low priority", to the service network 120 (step S540). As the request is made for normal priority services, the service network 120 accepts the request by replying to the mobile communication device 110 with a GMM accept message (step S550).

Specifically for LTE technology in compliance with the TS 24.008 and TS 24.301 specifications, the GMM accept message in step S550 may be an ATTACH ACCEPT, ROUTING AREA UPDATE ACCEPT, TRACKING AREA UPDATE ACCEPT, EXTENDED SERVICE ACCEPT, or SERVICE ACCEPT message.

Next, when the GMM congestion control back-off timer is still running and the mobile communication device 110 is accessing the service network 120 for normal priority services, the mobile communication device 110 receives a paging request for GPRS services from the service network 120 (step S560). In response to determining that the SM congestion control back-off timer is running for low priority services, the mobile communication device 110 does not stop the GMM congestion control back-off timer (step S570).

After that, the mobile communication device 110 may proceed with initiating a service request procedure to respond to the paging request, and the detailed description thereof is omitted herein for brevity since it is beyond the scope of the invention, or reference may be made to the TS 24.008 specification. Likewise, regarding the detailed description of the handling of the GMM request messages, the GMM reject message, and the GMM accept message in steps S510∼S520 and S540∼S550, reference may be made to the TS 24.008 and TS 24.301 specifications.

While the invention has been described by way of example and in terms of preferred embodiment, it is to be understood that the invention is not limited thereto. Those who are skilled in this technology can still make various alterations and modifications without departing from the scope of the present invention as defined by the following claims.

## Claims

1. A mobile communication device (110), configured for dual priority, comprising:
a wireless module (111) performing wireless transmission and reception to and from a service network (120); and
a controller module (112) starting a Session Management, SM, congestion control back-off timer for an Access Point Name, APN, in response to a first SM procedure being rejected by the service network, which was initiated for the APN with a first low priority indicator indicating that the mobile communication device (110) was configured for Non Access Stratum, NAS, signaling low priority (S210), and **characterized by** not stopping the SM congestion control back-off timer for the APN in response to a second SM procedure being initiated by the service network (120) for the APN and being related to an existing Packet Data Protocol, PDP, context previously requested by the mobile communication device (110) with a second low priority indicator indicating that the mobile communication device (110) was not configured for NAS signaling low priority (S220).

2. The mobile communication device of claim 1, wherein, when the SM congestion control back-off timer for the APN is running, the controller module (112) refrains from initiating any SM procedure for the APN with a third low priority indicator indicating that the mobile communication device (110) is configured for NAS signaling low priority.

3. The mobile communication device of claim 1, wherein the first SM procedure was initiated by the controller module (112) transmitting one of the following to the service network (120) via the wireless module (111):
ACTIVATE PDP CONTEXT REQUEST;
ACTIVATE SECONDARY PDP CONTEXT REQUEST;
MODIFY PDP CONTEXT REQUEST;
PDN CONNECTIVITY REQUEST;
BEARER RESOURCE ALLOCATION REQUEST; and
BEARER RESOURCE MODIFICATION REQUEST.

4. The mobile communication device of claim 1, wherein the second SM procedure was initiated by the service network (120) transmitting one of the following to the mobile communication device (110):
REQUEST PDP CONTEXT ACTIVATION;
REQUEST SECONDARY PDP CONTEXT ACTIVATION;
MODIFY PDP CONTEXT REQUEST;
ACTIVATE DEFAULT EPS BEARER CONTEXT REQUEST;
ACTIVATE DEDICATED EPS BEARER CONTEXT REQUEST; and
MODIFY EPS BEARER CONTEXT REQUEST.

5. The mobile communication device of claim 1, wherein the first SM procedure is rejected with a cause set to "#26" for indicating insufficient resources, and the SM congestion control back-off timer is a T3396 timer in compliance with 3rd Generation Partnership Project, 3GPP, specifications for Long Term Evolution, LTE, technology.

6. A congestion control method for a mobile communication device (110) configured for dual priority, comprising:
starting a Session Management, SM, congestion control back-off timer for an Access Point Name, APN, in response to a first SM procedure being rejected by a service network (120), which was initiated for the APN with a first low priority indicator indicating that the mobile communication device (110) was configured for Non Access Stratum, NAS, signaling low priority (S210); and
**characterized by**
not stopping the SM congestion control back-off timer for the APN in response to a second SM procedure being initiated by the service network (120) for the APN and being related to an existing Packet Data Protocol, PDP, context previously requested by the mobile communication device (110) with a second low priority indicator indicating that the mobile communication device (110) was not configured for NAS signaling low priority (S220).

7. The method of claim 6, further comprising refraining from initiating any SM procedure for the APN with a third low priority indicator indicating that the mobile communication device (110) is configured for NAS signaling low priority, when the SM congestion control back-off timer for the APN is running.

8. The method of claim 6, wherein the first SM procedure was initiated by the mobile communication device (110) transmitting one of the following to the service network (120):
ACTIVATE PDP CONTEXT REQUEST;
ACTIVATE SECONDARY PDP CONTEXT REQUEST;
MODIFY PDP CONTEXT REQUEST;
PDN CONNECTIVITY REQUEST;
BEARER RESOURCE ALLOCATION REQUEST ; and
BEARER RESOURCE MODIFICATION REQUEST.

9. The method of claim 6, wherein the second SM procedure was initiated by the service network (120) transmitting one of the following to the mobile communication device (110):
REQUEST PDP CONTEXT ACTIVATION;
REQUEST SECONDARY PDP CONTEXT ACTIVATION;
MODIFY PDP CONTEXT REQUEST;
ACTIVATE DEFAULT EPS BEARER CONTEXT REQUEST;
ACTIVATE DEDICATED EPS BEARER CONTEXT REQUEST; and
MODIFY EPS BEARER CONTEXT REQUEST.

10. The method of claim 6, wherein the first SM procedure is rejected with a cause set to "#26" for indicating insufficient resources, and the SM congestion control back-off timer is a T3396 timer in compliance with 3rd Generation Partnership Project, 3GPP, specifications for Long Term Evolution, LTE, technology.

11. A mobile communication device (110), configured for dual priority, comprising:
a wireless module (111) performing wireless transmission and reception to and from a service network (120); and
a controller module (112) starting a General Packet Radio Service, GPRS, Mobility Management, GMM, congestion control back-off timer in response to a first GMM procedure being rejected by the service network (120), which was initiated with a first low priority indicator indicating that the mobile communication device (110) was configured for Non Access Stratum, NAS, signaling low priority (S410), and **characterized by** not stopping the GMM congestion control back-off timer in response to receiving a paging request for GPRS services after a second GMM procedure which was accepted by the service network (120) and was initiated with a second low priority indicator indicating that the mobile communication device (110) was not configured for NAS signaling low priority (S420).

12. The mobile communication device of claim 11, wherein, when the GMM congestion control back-off timer is running, the controller module (112) refrains from initiating any GMM procedure with a third low priority indicator indicating that the mobile communication device (110) is configured for NAS signaling low priority.

13. The mobile communication device of claim 11, wherein the first GMM procedure or the second GMM procedure was initiated by the controller module (112) transmitting one of the following to the service network (120) via the wireless module (111):
ATTACH REQUEST;
ROUTING AREA UPDATE REQUEST;
TRACKING AREA UPDATE REQUEST;
EXTENDED SERVICE REQUEST; and
SERVICE REQUEST.

14. The mobile communication device of claim 11, wherein the first GMM procedure is rejected with a cause set to "#22" for indicating congestion, and the GMM congestion control back-off timer is a T3346 timer in compliance with 3rd Generation Partnership Project, 3GPP, specifications for Long Term Evolution, LTE, technology.

15. A congestion control method for a mobile communication device (110) configured for dual priority, comprising:
starting a General Packet Radio Service, GPRS, Mobility Management, GMM, congestion control back-off timer in response to a first GMM procedure being rejected by a service network (120), which was initiated with a first low priority indicator indicating that the mobile communication device (110) was configured for Non Access Stratum, NAS, signaling low priority (S410), and
**characterized by**
not stopping the GMM congestion control back-off timer in response to receiving a paging request for GPRS services after a second GMM procedure which was accepted by the service network (120) and was initiated with a second low priority indicator indicating that the mobile communication device (110) was not configured for NAS signaling low priority (S420).

## Patentansprüche

1. Eine Mobilkommunikationsvorrichtung (110), die für duale Priorität konfiguriert ist, die Folgendes aufweist:
ein Drahtlosmodul (111), das drahtlose Übertragung und drahtlosen Empfang an ein Dienstnetzwerk (120) und von diesem durchführt; und
ein Steuervorrichtungs- bzw. Controller-Modul (112), das einen Sitzungsverwaltungs- bzw. SM-Überlastungssteuerungs-Back-Off-Timer (SM = Session Management) für einen Zugangspunktnamen bzw. APN (APN = Access Point Name) ansprechend darauf startet, dass eine erste SM-Prozedur durch das Dienstnetzwerk zurückgewiesen wird, die für den APN initiiert wurde, wobei ein erster Indikator niedriger Priorität anzeigt, dass die Mobilkommunikationsvorrichtung (110) für NAS-Signaling-Low-Priority bzw. NAS-Signalisierung niedriger Priorität (S210) (NAS = Non Access Stratum) konfiguriert ist, und das **dadurch gekennzeichnet ist,**
**dass** es den SM-Überlastungsteuerungs-Back-Off-Timer für den APN ansprechend darauf nicht anhält, dass eine zweite SM-Prozedur durch das Dienstnetzwerk (120) für den APN initiiert wird und mit einem bestehenden Paketdatenprotokoll- bzw. PDP-Kontext (PDP = Packet Data Protocol) in Bezug gesetzt wird, der zuvor durch die Mobilkommunikationsvorrichtung (110) anfragt wurde, wobei ein zweiter Indikator niedriger Priorität anzeigt, dass die Mobilkommunikationsvorrichtung (110) nicht für NAS-Signaling-Low-Priority bzw. NAS-Signalisierung niedriger Priorität (S220) konfiguriert wurde.

2. Mobilkommunikationsvorrichtung nach Anspruch 1, wobei, wenn der SM-Überlastungssteuerungs-Back-Off-Timer für den APN läuft, es das Controller-Modul (112) unterlässt, irgendeine SM-Prozedur für den APN zu initiieren, wobei ein dritter Indikator niedriger Priorität anzeigt, dass die Mobilkommunikationsvorrichtung (110) für NAS-Signaling-Low-Priority bzw. NAS-Signalisierung niedriger Priorität konfiguriert ist.

3. Mobilkommunikationsvorrichtung nach Anspruch 1, wobei die erste SM-Prozedur dadurch initiiert wurde, dass das Controller-Modul (112) eines von Folgendem an das Dienstnetzwerk (120) über das Drahtlosmodul (111) sendet:
AKTIVIEREN EINER PDP-KONTEXT-ANFRAGE;
AKTIVIEREN EINER SEKUNDÄREN PDP-KONTEXT-ANFRAGE;
MODIFIZIEREN DER PDP-KONTEXT-ANFRAGE;
PDN-KONNEKTIVITÄTSANFRAGE;
TRÄGERRESSOURCENZUTEILUNGSANFRAGE; und
TRÄGERRESSOURCENMODIFIKATIONSANFRAGE.

4. Mobilkommunikationsvorrichtung nach Anspruch 1, wobei die zweite SM-Prozedur dadurch initiiert wurde, dass das Dienstnetzwerk (120) eines von Folgendem an die Mobilkommunikationsvorrichtung (110) sendet:
ANFRAGEN EINER PDP-KONTEXT-AKTIVIERUNG;
ANFRAGEN EINER SEKUNDÄREN PDP-KONTEXT-AKTIVIERUNG;
MODIFIZIEREN DER PDP-KONTEXT-ANFRAGE;
AKTIVIEREN EINER VOREINGESTELLTEN BZW. DEFAULT-EPS-TRÄGER-KONTEXT-ANFRAGE;
AKTIVIEREN EINER DEDIZIERTEN EPS-TRÄGER-KONTEXT-ANFRAGE; und
MODIFIZIEREN DER EPS-TRÄGER-KONTEXT-ANFRAGE.

5. Mobilkommunikationsvorrichtung nach Anspruch 1, wobei die erste SM-Prozedur abgewiesen wird, wobei eine Ursache auf "#26" eingestellt ist, um nicht ausreichende Ressourcen anzuzeigen, und wobei der SM-Überlastungssteuerungs-Back-Off-Timer ein T3396-Timer ist, der mit den 3GPP-Spezifikationen (3GPP = 3rd Generation Partnership Project) für die LTE-Technologie (LTE = Long Term Evolution) übereinstimmt.

6. Ein Überlastungssteuerungsverfahren für eine Mobilkommunikationsvorrichtung (110), die für duale Priorität konfiguriert ist, das Folgendes aufweist:
Starten eines Sitzungsverwaltungs- bzw. SM-Überlastungssteuerungs-Back-Off-Timers (SM = Session Management) für einen Zugangspunktnamen bzw. APN (APN = Access Point Name) ansprechend darauf, dass eine erste SM-Prozedur durch ein Dienstnetzwerk (120) zurückgewiesen wird, die für den APN initiiert wurde, wobei ein erster Indikator niedriger Priorität anzeigt, dass die Mobilkommunikationsvorrichtung (110) für NAS-Signaling-Low-Priority bzw. NAS-Signalisierung niedriger Priorität (S210) (NAS = Non Access Stratum) konfiguriert wurde; und
das **gekennzeichnet ist durch**
Nicht-Beenden des SM-Überlastungssteuerungs-Back-Off-Timers für den APN ansprechend darauf, dass eine zweite SM-Prozedur **durch** das Dienstnetzwerk (120) für den APN initiiert wird und mit einem existierenden Paketdatenprotokoll- bzw. PDP-Kontext (PDP = Packet Data Protocol) in Bezug gesetzt wird, der zuvor **durch** die Mobilkommunikationsvorrichtung (110) Ngefragt wurde, wobei ein zweiter Indikator niedriger Priorität anzeigt, dass die Mobilkommunikationsvorrichtung (110) nicht für NAS-Signaling-Low-Priority bzw. NAS-Signalisierung niedriger Priorität (S220) konfiguriert wurde.

7. Verfahren nach Anspruch 6, das weiter Unterlassen des Initiierens irgendeiner SM-Prozedur für den APN aufweist, wobei ein dritter Indikator niedriger Priorität anzeigt, dass die Mobilkommunikationsvorrichtung (110) für NAS-Signalisierung niedriger Priorität konfiguriert ist, wenn der SM-Überlastungssteuerungs-Back-Off-Timer für den APN läuft.

8. Verfahren nach Anspruch 6, wobei die erste SM-Prozedur dadurch initiiert wurde, dass die Mobilkommunikationsvorrichtung (110) eines von Folgendem an das Dienstnetzwerk (120) sendet bzw. überträgt:
AKTIVIEREN EINER PDP-KONTEXT-ANFRAGE;
AKTIVIEREN EINER SEKUNDÄREN PDP-KONTEXT-ANFRAGE;
MODIFIZIEREN DER PDP-KONTEXT-ANFRAGE;
PDN-KONNEKTIVITÄTSANFRAGE;
TRÄGERRESSOURCENZUTEILUNGSANFRAGE; und
TRÄGERRESSOURCENMODIFIKATIONSANFRAGE.

9. Verfahren nach Anspruch 6, wobei die zweite SM-Prozedur dadurch initiiert wurde, dass das Dienstnetzwerk (120) eines von Folgendem an die Mobilkommunikationsvorrichtung (110) sendet bzw. überträgt:
ANFRAGEN EINER PDP-KONTEXT-AKTIVIERUNG;
ANFRAGEN EINER SEKUNDÄREN PDP-KONTEXT-AKTIVIERUNG;
MODIFIZIEREN DER PDP-KONTEXT-ANFRAGE;
AKTIVIEREN EINER VOREINGESTELLTEN BZW. DEFAULT-EPS-TRÄGER-KONTEXT-ANFRAGE;
AKTIVIEREN EINER DEDIZIERTEN EPS-TRÄGER-KONTEXT-ANFRAGE; und
MODIFIZIEREN DER EPS-TRÄGER-KONTEXT-ANFRAGE.

10. Verfahren nach Anspruch 6, wobei die erste SM-Prozedur abgewiesen wird, wobei eine Ursache auf "#26" eingestellt ist, um nicht ausreichende Ressourcen anzuzeigen, und wobei der SM-Überlastungssteuerungs-Back-Off-Timer ein T3396-Timer ist, der mit den 3GPP-Spezifikationen (3GPP = 3rd Generation Partnership Project) für die LTE-Technologie (LTE = Long Term Evolution) übereinstimmt.

11. Eine Mobilkommunikationsvorrichtung (110), die für duale Priorität konfiguriert ist, die Folgendes aufweist:
ein Drahtlosmodul (111), das drahtlose Übertragung und drahtlosen Empfang an ein Dienstnetzwerk (120) und von diesem durchführt; und
ein Steuervorrichtungs- bzw. Controller-Modul (112) zum Starten eines GMM-Überlastungssteuerungs-Back-Off-Timers (GMM = GPRS Mobility Management, GPRS = General Packet Radio Service) ansprechend darauf, dass eine erste GMM-Prozedur von dem Dienstnetzwerk (120) zurückgewiesen wird, welche initiiert wurde, wobei ein erster Indikator niedriger Priorität anzeigt, dass die Mobilkommunikationsvorrichtung (110) für NAS-Signaling-Low-Priority bzw. NAS-Signalisierung niedriger Priorität (S410) (NAS = Non Access Stratum) konfiguriert wurde, und das **gekennzeichnet ist durch** Nicht-Anhalten des GMM-Überlastungssteuerungs-Back-Off-Timers ansprechend auf das Empfangen einer Funkruf- bzw. Paging-Anfrage nach GPRS-Diensten nach einer zweiten GMM-Prozedur, die **durch** das Dienstnetzwerk (120) akzeptiert wurde und initiiert wurde, wobei ein zweiter Indikator niedriger Priorität anzeigt, dass die Mobilkommunikationsvorrichtung (110) nicht für NAS-Signaling-Low-Priority bzw. NAS-Signalisierung mit niedriger Priorität (S420) konfiguriert wurde.

12. Mobilkommunikationsvorrichtung nach Anspruch 11, wobei, wenn der GMM-Überlastungssteuerungs-Back-Off-Timer läuft, das Controller-Modul (112) es unterlässt, irgendeine GMM-Prozedur zu initiieren, wobei ein dritter Prioritätsindikator niedriger Priorität anzeigt, dass die Mobilkommunikationsvorrichtung (110) für NAS-Signaling-Low-Priority bwz. NAS-Signalisierung niedriger Priorität konfiguriert ist.

13. Mobilkommunikationsvorrichtung nach Anspruch 11, wobei die erste GMM-Prozedur oder die zweite GMM-Prozedur dadurch initiiert wurde, dass das Controller-Modul (112) eines von Folgendem an das Dienstnetzwerk (120) über das Drahtlosmodul (111) sendet bzw. überträgt:
VERBINDUNGSANFRAGE;
WEITERLEITUNGS- BZW. ROUTINGBEREICHSAKTUALISIERUNGSAN-FRAGE;
NACHVERFOLGUNGSBEREICHSAKTUALISIERUNGSANFRAGE;
ERWEITERTE DIENSTANFRAGE; und
DIENSTANFRAGE.

14. Mobilkommunikationsvorrichtung nach Anspruch 11, wobei die erste GMM-Prozedur abgewiesen wird, wobei eine Ursache auf "#22" eingestellt ist, um Überlastung anzuzeigen, und wobei der GMM-Überlastungssteuerungs-Back-Off-Timer ein T3346-Timer ist, der mit den 3GPP-Spezifikationen (3GPP = 3rd Generation Partnership Project) für die LTE-Technologie (LTE = Long Term Evolution) übereinstimmt.

15. Ein Überlastungssteuerungsverfahren für eine Mobilkommunikationsvorrichtung (110), die für duale Priorität konfiguriert ist, das Folgendes aufweist:
Starten eines GMM-Überlastungssteuerungs-Back-Off-Timers (GMM = GPRS Mobility Management, GPRS = General Packet Radio Service) ansprechend darauf, dass eine erste GMM-Prozedur von einem Dienstnetzwerk (120) zurückgewiesen wird, welche initiiert wurde, wobei ein erster Indikator niedriger Priorität anzeigt, dass die Mobilkommunikationsvorrichtung (110) für NAS-Signaling-Low-Priority bzw. NAS-Signalisierung niedriger Priorität (S410) (NAS = Non Access Stratum) konfiguriert wurde, und
das **gekennzeichnet ist durch**
Nicht-Beenden des GMM-Überlastungssteuerungs-Back-Off-Timers ansprechend auf das Empfangen einer Funkruf- bzw. Paging-Anfrage nach GPRS-Diensten nach einer zweiten GMM-Prozedur, die **durch** das Dienstnetzwerk (120) akzeptiert wurde und initiiert wurde, wobei ein zweiter Indikator niedriger Priorität anzeigt, dass die Mobilkommunikationsvorrichtung (110) nicht für NAS-Signaling-Low-Priority bzw. NAS-Signalisierung mit niedriger Priorität (S420) konfiguriert wurde.

## Revendications

1. Dispositif de communication mobile (110), agencé pour une double priorité, comprenant :
un module sans fil (111) réalisant une émission et une réception sans fil vers et à partir d'un réseau de services (120) ; et
un module contrôleur (112) démarrant un minuteur de retrait pour le contrôle d'encombrement de Gestion de Session, SM, pour un nom de point d'accès, APN, en réponse au fait qu'une première procédure SM a été refusée par le réseau de service, qui a été lancée pour l'APN avec un premier indicateur de priorité faible indiquant que le dispositif de communication mobile (110) était configuré pour une faible priorité de signalisation de Strate de Non Accès, NAS, (S210), et **caractérisé en ce qu'**on n'arrête pas le minuteur de retrait pour le contrôle d'encombrement SM pour l'APN en réponse au fait qu'une deuxième procédure SM soit lancée par le réseau de service (120) pour l'APN et soit associée à un contexte de Protocole de Paquets de Données, PDP, existant demandé précédemment par le dispositif de communication mobile (110) avec un deuxième indicateur de priorité faible indiquant que le dispositif de communication mobile (110) n'était pas configuré pour une priorité faible de signalisation NAS (S220).

2. Dispositif de communication mobile selon la revendication 1, dans lequel, lorsque le minuteur de retrait pour le contrôle d'encombrement SM pour l'APN est en marche, le module contrôleur (112) s'abstient de lancer toute procédure SM pour l'APN avec un troisième indicateur de priorité faible indiquant que le dispositif de communication mobile (110) est configuré pour une priorité faible de signalisation NAS.

3. Dispositif de communication mobile selon la revendication 1, dans lequel la première procédure SM a été lancée par le module contrôleur (112) en émettant l'un des messages suivants vers le réseau de service (120) par l'intermédiaire du module sans fil (111) :
ACTIVATE PDP CONTEXT REQUEST
(demande d'activation de contexte PDP) ;
ACTIVATE SECONDARY PDP CONTEXT REQUEST (demande d'activation de contexte PDP secondaire) ;
MODIFY PDP CONTEXT REQUEST
(demande de modification de contexte PDP) ;
PDN CONNECTIVITY REQUEST
(demande de connectivité PDN) ;
BEARER RESOURCE ALLOCATION REQUEST
(demande d'allocation de ressources de support) ; et
BEARER RESOURCE MODIFICATION REQUEST
(demande de modification de ressources de support).

4. Dispositif de communication mobile selon la revendication 1, dans lequel la deuxième procédure SM a été lancée par le réseau de service (120) en émettant l'un des messages suivants vers le dispositif de communication mobile (110) :
REQUEST PDP CONTEXT ACTIVATION
(demande d'activation de contexte PDP) ;
REQUEST SECONDARY PDP CONTEXT ACTIVATION (demande d'activation de contexte PDP secondaire) ;
MODIFY PDP CONTEXT REQUEST
(demande de modification de contexte PDP) ;
ACTIVATE DEFAULT EPS BEARER CONTEXT REQUEST
(demande d'activation de contexte de support EPS par défaut) ;
ACTIVATE DEDICATED EPS BEARER CONTEXT REQUEST
(demande d'activation de contexte de support EPS dédié) ; et
MODIFY EPS BEARER CONTEXT REQUEST
(demande de modification de contexte de support EPS.

5. Dispositif de communication mobile selon la revendication 1, dans lequel la première procédure SM est refusée avec une cause mise à "#26" pour indiquer des ressources insuffisantes, et le minuteur de retrait pour le contrôle d'encombrement SM est un minuteur T3396 conforme aux spécifications du Projet de Partenariat de Troisième Génération, 3GPP, pour la technologie d'Evolution à Long Terme, LTE.

6. Procédé de contrôle d'encombrement pour un dispositif de communication mobile (110) agencé pour une double priorité, comprenant :
démarrer un minuteur de retrait pour le contrôle d'encombrement de Gestion de Session, SM, pour un nom de point d'accès, APN, en réponse au fait qu'une première procédure SM a été refusée par un réseau de service (120), qui a été lancée pour l'APN avec un premier indicateur de priorité faible indiquant que le dispositif de communication mobile (110) était configuré pour une faible priorité de signalisation de Strate de Non Accès, NAS, (S210), et
**caractérisé en ce qu'**on n'arrête pas le minuteur de retrait pour le contrôle d'encombrement SM pour l'APN en réponse au fait qu'une deuxième procédure SM soit lancée par le réseau de service (120) pour l'APN et soit associée à un contexte de Protocole de Paquets de Données, PDP, existant demandé précédemment par le dispositif de communication mobile (110) avec un deuxième indicateur de priorité faible indiquant que le dispositif de communication mobile (110) n'était pas configuré pour une priorité faible de signalisation NAS (S220).

7. Procédé selon la revendication 6, dans lequel en outre on s'abstient de lancer toute procédure SM pour l'APN avec un troisième indicateur de priorité faible indiquant que le dispositif de communication mobile (110) est configuré pour une priorité faible de signalisation NAS, lorsque le minuteur de retrait pour le contrôle d'encombrement SM pour l'APN est en marche.

8. Procédé selon la revendication 6, dans lequel la première procédure SM a été lancée par le dispositif de communication mobile (110) en émettant l'un des messages suivants vers le réseau de service (120) :
ACTIVATE PDP CONTEXT REQUEST
(demande d'activation de contexte PDP) ;
ACTIVATE SECONDARY PDP CONTEXT REQUEST (demande d'activation de contexte PDP secondaire) ;
MODIFY PDP CONTEXT REQUEST
(demande de modification de contexte PDP) ;
PDN CONNECTIVITY REQUEST
(demande de connectivité PDN) ;
BEARER RESOURCE ALLOCATION REQUEST
(demande d'allocation de ressources de support) ; et
BEARER RESOURCE MODIFICATION REQUEST
(demande de modification de ressources de support).

9. Procédé selon la revendication 6, dans lequel la deuxième procédure SM a été lancée par le réseau de service (120) en émettant l'un des messages suivants vers le dispositif de communication mobile (110) :
REQUEST PDP CONTEXT ACTIVATION
(demande d'activation de contexte PDP) ;
REQUEST SECONDARY PDP CONTEXT ACTIVATION (demande d'activation de contexte PDP secondaire) ;
MODIFY PDP CONTEXT REQUEST
(demande de modification de contexte PDP) ;
ACTIVATE DEFAULT EPS BEARER CONTEXT REQUEST
(demande d'activation de contexte de support EPS par défaut) ;
ACTIVATE DEDICATED EPS BEARER CONTEXT REQUEST
(demande d'activation de contexte de support EPS dédié) ; et
MODIFY EPS BEARER CONTEXT REQUEST
(demande de modification de contexte de support EPS.

10. Procédé selon la revendication 6, dans lequel la première procédure SM est refusée avec une cause mise à "#26" pour indiquer des ressources insuffisantes, et le minuteur de retrait pour le contrôle d'encombrement SM est un minuteur T3396 conforme aux spécifications du Projet de Partenariat de Troisième Génération, 3GPP, pour la technologie d'Evolution à Long Terme, LTE.

11. Dispositif de communication mobile (110), agencé pour une double priorité, comprenant :
un module sans fil (111) réalisant une émission et une réception sans fil vers et à partir d'un réseau de service (120) ; et
un module contrôleur (112) démarrant un minuteur de retrait pour le contrôle d'encombrement de Gestion de Mobilité, GMM, du Service Radio Général de Paquets, GPRS, en réponse au fait qu'une première procédure GMM est refusée par le réseau de service (120), qui a été lancée avec un premier indicateur de priorité faible indiquant que le dispositif de communication mobile (110) était configuré pour une priorité faible de signalisation de Strate de Non Accès, NAS, (S410), et **caractérisé en ce qu'**on n'arrête pas le minuteur de retrait pour le contrôle d'encombrement GMM en réponse à la réception d'une demande de téléavertissement pour des services GPRS après une deuxième procédure GMM qui a été acceptée par le réseau de service (120) et qui a été lancée avec un deuxième indicateur de priorité faible indiquant que le dispositif de communication mobile (110) n'était pas configuré pour une priorité faible de signalisation NAS (S420).

12. Dispositif de communication mobile selon la revendication 11, dans lequel, lorsque le minuteur de retrait pour le contrôle d'encombrement est en marche, le module contrôleur (112) s'abstient de lancer toute procédure GMM avec un troisième indicateur de priorité faible indiquant que le dispositif de communication mobile (110) est configuré pour une priorité faible de signalisation NAS.

13. Dispositif de communication mobile selon la revendication 11, dans lequel la première procédure GMM ou la deuxième procédure GMM a été lancée par le module contrôleur (112) en émettant l'un des messages suivants vers le réseau de service (120) par l'intermédiaire du module sans fil (111) :
ATTACH REQUEST
(demande d'attachement) ;
ROUTING AREA UPDATE REQUEST
(demande de mise à jour de région de routage) ;
TRACKING AREA UPDATE REQUEST
(demande de mise à jour de région de suivi) ;
EXTENDED SERVICE REQUEST
(demande de service étendu) ; et
SERVICE REQUEST
(demande de service).

14. Dispositif de communication mobile selon la revendication 11, dans lequel la première procédure GMM est refusée avec une cause mise à "#22" pour indiquer un encombrement, et le minuteur de retrait pour le contrôle d'encombrement GMM est un minuteur T3346 conforme aux spécifications du Projet de Partenariat de Troisième Génération, 3GPP, pour la technologie d'Evolution à Long Terme, LTE.

15. Procédé de contrôle d'encombrement pour un dispositif de communication mobile (110) configuré pour une double priorité, comprenant :
démarrer un minuteur de retrait pour le contrôle d'encombrement de Gestion de Mobilité, GMM, du Service Radio Général de Paquets, GPRS, en réponse au fait qu'une première procédure GMM est refusée par le réseau de service (120), qui a été lancée avec un premier indicateur de priorité faible indiquant que le dispositif de communication mobile (110) était configuré pour une priorité faible de signalisation de Strate de Non Accès, NAS, (S410), et
**caractérisé en ce qu'**on n'arrête pas le minuteur de retrait pour le contrôle d'encombrement GMM en réponse à la réception d'une demande de téléavertissement pour des services GPRS après une deuxième procédure GMM qui a été acceptée par le réseau de service (120) et qui a été lancée avec un deuxième indicateur de priorité faible indiquant que le dispositif de communication mobile (110) n'était pas configuré pour une priorité faible de signalisation NAS (S420).
